# EUROPEAN PATENT SPECIFICATION

(11) **EP 3 762 465 B1**
(45) Date of publication and mention of the grant of the patent: **03.05.2023**
(21) Application number: 18909037.6
(22) Date of filing: 08.03.2018
(51) Int. Cl.: C09J 183/00, C08L 83/00, C08L 51/04, C08L 83/04, C08L 83/07, C09J 183/07

(54) **SELF-ADHESIVE SILICONE ELASTOMER**
SELBSTKLEBENDES SILIKONELASTOMER
ÉLASTOMÈRE SILICONE AUTO-ADHÉSIF

(43) Date of publication of application: 13.01.2021
(73) Proprietor: Dow Silicones Corporation, Midland, MI 48686-0994 (US)
(72) Inventor: WANG, Rui, Shanghai 201203 (CN); WANG, Shaohui, Shanghai 201203 (CN); CHEN, Yusheng, Shanghai 201203 (CN)
(74) Representative: Murgitroyd & Company
(86) International application number: PCT/CN2018/078439
(87) International publication number: WO 2019/169609

(56) References cited:
- EP-A2- 0 497 349
- WO-A1-03/066736
- WO-A1-2014/018814
- WO-A1-2014/073789
- CN-A- 104 152 104
- US-A- 5 618 631
- US-A1- 2010 279 469
- US-B1- 6 387 487

## Description

The present invention relates to self-adhesive curable silicone rubber compositions which when cured achieve significant adhesion to plastic and thermoplastic substrate materials in particular polycarbonate materials. Also included is a process for preparing polycarbonate/cured silicone elastomer materials and articles and composite parts made from said compositions.

Curable silicone elastomer compositions cure to provide silicone elastomer materials (otherwise referred to as silicone rubbers). One suitable cure process is usually via an addition cure mechanism, otherwise described as a hydrosilylation process using a platinum group catalyst to catalyse the reaction between Si-alkenyl groups and Si-H groups.

Silicone elastomers are used in a wide variety of applications including, for the sake of example, in electric and electronic, healthcare, kitchenware, and automotive applications not least because they have highly reliable properties with respect to heat resistance, weatherability and electrical insulation. In automotive connector seal applications, silicone rubber can provide reliable sealing performance compared with many plastics particularly in harsh environments. They provide reliable seals for the use of safe running of automotive electronic control systems, enhancing the safety and comfort experience for both drivers and passengers. Silicone seals and coatings are also important for the water-proofing and sealing of parts made from silicone rubber in smart phone and wearable devices. However, in certain applications their use has been limited due to their inability to form sufficiently strong adhesive bonds with plastic and thermoplastic substrates such as polycarbonates.

Transparent synthetic organic materials such as polycarbonates are increasingly being used as an alternative to glass e.g. in electrical and glazing applications because of their aforementioned transparency but also because they are lighter in weight than glass and have the added advantage of being "shatter-resistant", in the case of accidents or when dropped. The use of such shatter-resistant materials in applications previously using glass is becoming increasingly common for example in glazing applications such as windows in buildings and public transportation vehicles such as trains, buses, taxis and airplanes. Lenses for eye glasses and other optical instruments increasingly also employ shatter-resistant, transparent plastics such as the polycarbonates.

However, a serious drawback lies in the ease with which these plastics mar and scratch due to everyday contact with abrasives such as dust or cleaning equipment. Marring results in impaired visibility and poor aesthetics, and often requires replacement of the glazing or lens or the like. Whilst this might well be possible for some applications, the use of polycarbonate materials in modern electronic applications e.g. as screens for computers, including tablets, digital phones and e-readers and the like is problematic if the screens are scratched etc. It is known to use silicone based elastomeric materials to improve the abrasion resistance of plastics and provide mar-resistant coatings. Whilst a variety of silicone based elastomeric coatings have been developed during recent years to screen or absorb ultraviolet radiation and thereby serve to prolong the service life of coated articles, adhesion of e.g. silicone based coatings to the polycarbonate materials have proved an issue. Several solutions have been proposed to enhance adhesion between e.g. polycarbonate substrates and silicone based elastomeric coatings or the like but many have proven not to be wholly successful.

Abrasion-resistant silicone rubber coating compositions, which are currently used to coat polycarbonate are not thermoformable after curing, especially when required to be present in thick layers. Poor thermoformability means that bending or working a coated polycarbonate substrate will often lead to cracking or crazing of the silicone coating. As a consequence, polycarbonate surfaces have to be coated after forming, which may entail time delays and shipment of uncoated articles which in turn can lead to the inadvertent abrasion of e.g. polycarbonate surfaces in transit or even just in normal daily use.

In some instances, the silicone elastomer may be overmoulded onto other parts made of different or the same materials or may be coated on textiles or fabrics. For example a silicone gasket can be moulded onto a thermoplastic housing, made from polyamide or polybutylene terephthalate. In another example a wearable electronic device can be obtained by overmoulding a hard thermoplastic such as polycarbonate with a soft layer or part made of liquid silicone rubber. Further examples include airbag fabrics coated with a silicone elastomer.

Document US-A-5 618 631 describes a composite comprising a cured product of an epoxy resin composition joined to a cured product of a silicone rubber composition. The silicone composition comprises an organopolysiloxane with at least two alkenyl groups, an organopolysiloxane comprising at least two SiH groups per molecule and a hydrosilylation catalyst. The silicone composition is then placed in a mold and covered by an epoxy resin composition comprising an organopolysiloxane having cyclic siloxane units, epoxy and SiH groups and an orgnosilane or siloxane comprising SiOH groups. Both composition are cured in order to form a composite.

Document WO-A-2014/018814 describes a self-adhesive curable silicone composition comprising an organopolysiloxane with at least two alkenyl groups, an organopolysiloxane comprising at least two SiH groups per molecule, a hydrosilylation catalyst, an adhesion promoter and an adhesion catalyst in the form of microparticles of a semi-crystalline polymer and an organometallic condensation catalyst. The adhesion promoter may be an organopolysiloxane comprising epoxy groups and SiH groups. The composition may further contain reinforcing fillers.

Document US-A-2010/0279469 describes a curable silicone composition used for the preparation of an adhesive film. The silicone composition comprises an organopolysiloxane comprising alkenyl groups, an organo peroxide, silica as reinforcing filler and a toughening polymer such as a carboxy-terminated butadiene-nitrile-modified epoxy resin (CTBN).

Document EP-A-497 349 describes a self-adhesive curable silicone composition exhibiting strong interaction to plastic substrates. The composition comprises an organopolysiloxane with at least two alkenyl groups, an organopolysiloxane comprising at least two SiH groups per molecule, a hydrosilylation catalyst and an adhesion promoter system consisting of an organopolysiloxane comprising alkenyl groups and Si-OR groups, an organopolysiloxane comprising epoxy groups and Si-OR groups and an aluminium or zirconium compound. Fillers such as silica may also be present in the composition.

Several methods have been proposed for providing a bond between addition curing type silicone rubber materials and organic resins. It is known for example, to form a bond by applying a primer to a surface of molded resin, applying uncured silicone rubber material thereto and curing the silicone rubber to the resin or by curing self-adhesive silicone rubber compositions directly to molded resin.

However, several problems have arisen using methods requiring primers. Primer methods are cumbersome not least because they can result in unreliable productivity, quality control issues and indeed reliability issues for parts/articles being made. The selection, storage, use and processing of primers can also greatly influence the adhesion level resulting in a need to take great care of them not least during storage before use. So the use of primers needs to be well controlled in order to achieve good adhesion. However such processes are often time consuming and may result in low productivity and seals of variable quality. There is therefore a need to replace processes relying on primers to create adequate adhesion by using self-adhesive silicone rubber materials which will have high quality adhesion without the need for primed surfaces. Self-adhesive silicone rubber materials are intended to mean silicone rubber materials which will adhere to plastic and thermoplastic substrate surfaces, e.g. polycarbonate substrate surfaces which substrate surfaces are in an unprimed or non-activated state.

The use of self-adhesive silicone rubbers is preferred as it can give better productivity, quality control and reliability of the parts/articles at least partially due to the removal of the need to use the primer. Where a self-adhesive addition curing type silicone rubber material is applied and cured to a plastic/thermoplastic/resin material preform the adhesive bond formed between the two has regularly proven to be insufficient for use as a one-piece member when the plastic/thermoplastic/resin is a polycarbonate resin. In a further alternative proposal it has been suggested to incorporate liquid silicone rubber crosslinkers, e.g. organohydrogenpolysiloxanes in the polycarbonate substrate. However, such a process has been found to have a negative effect on the physical properties of the polycarbonate itself preventing the resin from exerting its own properties. The physical engagement method leaves a possibility that the two segments may be disengaged by physical forces.

Hence, there is a need to develop a silicone rubber composition which will form a strong adhesive bond to plastic/thermoplastic/resin material substrates, particularly polycarbonate substrates. To meet such a demand, there is a desire to have integral moldings in which plastic/thermoplastic/resin materials, especially polycarbonate resin and silicone rubber are firmly united or bonded together.

This invention relates to a self-adhesive curable silicone elastomer composition abrasion and chemical solvent resistant organopolysiloxane coated polycarbonate articles wherein the organopolysiloxane top coat is tenaciously adhered to the polycarbonate substrate and to a process for producing such an article. More particularly, the present invention relates to an organopolysiloxane coated polycarbonate article which does not require the use of primer treatment before the application of the silicone rubber based composition onto the plastic (polycarbonate) substrate surface.

The present invention relates to a self-adhesive curable silicone elastomer composition that can achieve significant adhesion on plastic/thermoplastic/resin material substrates, especially polycarbonate material substrates includes:
(A) 5-95% by weight of one or more organopolysiloxanes containing at least 2 alkenyl groups per molecule and having a viscosity of greater than 1,000,000mPa.s at 25°C
(B) 0.1-40% by weight of an organopolysiloxane containing at least 2 silicon-bonded hydrogen atoms per molecule, SiH containing silicone polymers, preferred 1-5%;
(C) 0.01-10% by weight of a platinum group catalyst,
(D) 1-80% by weight of reinforcing and/or non-reinforcing fillers;
(E) 0.1-50% by weight of one or more rubber modified epoxy resins, selected from the group of carboxyl-terminated butadiene acrylonitrile (CTBN) modified epoxy resin , hydroxyl-terminated butadiene acrylonitrile (HTBN) modified epoxy resin, amido-terminated butadiene acrylonitrile (ATBN) modified epoxy resin , epoxy-terminated butadiene acrylonitrile (ETBN) modified epoxy resin and vinyl-terminated butadiene acrylonitrile (VTBN) modified epoxy resin; and optionally
   additives such as one or more cure inhibitors, mold releasing agents, adhesion catalysts, silane crosslinkers and/or pigments;
wherein the total weight (wt.) % of the composition is 100%.

For the avoidance of doubt the term self-adhesive is intended to mean that is able to provide an adhesive bond directly on a substrate without the need of e.g. an intermediate layer of a priming material.

Each of the one or more organopolysiloxanes (A) contain at least 2 alkenyl groups bonded to a silicon atom per molecule and has a viscosity of greater than 1,000,000 mPa.s at 25°C. The lower end of the range of viscosities are measured using an AR 2000 Rheometer from TA Instruments of New Castle, DE, USA. Gums have such high viscosities that measurement of viscosity is very difficult in which case they are described in terms of Williams Plasticity number as discussed below. In one alternative polymer A is in the form of one or more siloxane gums. Examples of alkenyl groups include vinyl, allyl, butenyl, pentenyl, cyclohexenyl and hexenyl groups. These may be pendent or terminal or at both positions, that is, they may be present on any of the siloxy units of the organopolysiloxane (A). Component (A) comprises straight chain and/or branched organopolysiloxanes comprising multiple units of the formula (1)

R'ₐSiO_{4-a/2} (1)

wherein each R' may be the same or different and denotes a hydrocarbon group having from 1 to 18 carbon atoms, a substituted hydrocarbon group having from 1 to 18 carbon atoms or a hydrocarbonoxy group having up to 18 carbon atoms and has, on average, a value of from 1 to 3, preferably 1.8 to 2.2.

For the purpose of this application "Substituted" means one or more hydrogen atoms in a hydrocarbon group has been replaced with another substituent. Examples of such substituents include, but are not limited to, halogen atoms such as chlorine, fluorine, bromine, and iodine; halogen atom containing groups such as chloromethyl, perfluorobutyl, trifluoroethyl, and nonafluorohexyl; oxygen atoms; oxygen atom containing groups such as (meth)acrylic and carboxyl; nitrogen atoms; nitrogen atom containing groups such as amino-functional groups, amido-functional groups, and cyano-functional groups; sulphur atoms; and sulphur atom containing groups such as mercapto groups.

Particularly preferred examples of groups R' include methyl, ethyl, propyl, butyl, vinyl, cyclohexyl, phenyl, tolyl group, a propyl group substituted with chlorine or fluorine such as 3,3,3-trifluoropropyl, chlorophenyl, beta-(perfluorobutyl)ethyl or chlorocyclohexyl group. Preferably, at least some and more preferably substantially all of the groups R' are methyl. Some R' groups may be phenyl groups or fluoro groups. In one alternative, the polydiorganosiloxanes are largely polydialkylsiloxanes and/or polydialkylalkylphenylsiloxanes having at least two alkenyl groups per molecule. In a further alternative the polydiorganosiloxanes are largely polydimethylsiloxanes having at least two alkenyl groups per molecule. They are preferably substantially linear materials, which are end-blocked with a siloxane group of the formula R"₃SiO_{1/2}, wherein each R" is the same or different

The viscosity of organopolysiloxane (A) at 25° C is typically greater than 1,000,000 mPa.s, alternatively greater than 10,000,000 mPa.s at 25° C. The viscosity of polymers at the lower end of this range are measured using an AR 2000 Rheometer from TA Instruments of New Castle, DE, USA. Preferably polymer (A) is preferably of a gum like consistency which typically means it is too stiff to measure its viscosity using any standard equipment and as such rather than viscosity values, the Williams' Plasticity Number may be identified using a parallel plate plastometer in accordance with ASTM D926-17. Typical Williams' Plasticity Number values for the gums suitable for use range between 100mm/100 to 180mm/100.

Examples of the organopolysiloxane (A) which may be used include vinyldimethylsiloxy-endblocked dimethylsiloxane-vinylmethylsiloxane copolymer, vinyldimethylsiloxy-endblocked polydimethylsiloxane, vinylmethylhydroxysiloxy-endblocked dimethylsiloxane-vinylmethylsiloxane copolymer, and mixtures thereof.

The organopolysiloxane (A) may be either a single polymer, or a combination of two or more different polymers.

The organopolysiloxane (A) is present in the formulation at a level of from 5 to 95% based on the total weight of the composition, alternatively from 35 to 85 % by weight, based on the total weight of the composition, alternatively from 40 to 80% by weight based on the total weight of the composition and further alternatively from 50 to 80% by weight based on the total weight of the composition.

Component (B) is an organopolysiloxane containing at least 2 silicon-bonded hydrogen atom per molecule. There are no special restrictions with regard to the molecular structure of component (B) that may have a linear, branched, cyclic, or a three-dimensional net-like molecular structure. Silicon-bonded organic groups used in component (B) may be exemplified by methyl, ethyl, propyl, butenyl, pentenyl, hexyl, or similar alkyl groups; phenyl, tolyl, xylyl, or similar aryl groups; 3-chloropropyl, 3,3,3-trifluoropropyl, or similar halogenated alkyl group, preferable of which are methyl and phenyl groups.

Component (B) can be exemplified by the following compounds: a methylhydrogenpolysiloxane capped at both molecular terminals with trimethylsiloxy groups; a copolymer of a methylhydrogensiloxane and a dimethylsiloxane capped at both molecular terminals with trimethylsiloxy groups; dimethylsiloxane capped at both molecular terminals with dimethylhydrogensiloxy groups; a copolymer of a methylhydrogensiloxane and a dimethylsiloxane capped at both molecular terminals with dimethylhydrogensiloxy groups; a copolymer of a methylhydrogensiloxane and a methylphenylsiloxane capped at both molecular terminals with dimethylphenylsiloxy groups; a cyclic methylhydrogenpolysiloxane; a copolymer consisting of (CH₃)₂HSiO_{1/2} siloxane units and SiO_{4/2} units; a copolymer consisting of (CH₃)₂HSiO_{1/2} siloxane units, (CH₃)₃SiO_{1/2} siloxane units, and SiO_{4/2} units, the aforementioned organopolysiloxanes in which a part or all methyl groups are substituted with ethyl, propyl, or similar alkyl groups; phenyl, tolyl, or similar aryl groups; 3,3,3-trifluoropropyl, or similar halogenated alkyl groups; or a mixture of two or more of the aforementioned organopolysiloxanes.

The viscosity of organopolysiloxane (B) at 25° C is not critical, but it may be recommended that this component has a viscosity ranging from 0.1 to 100,000 mPa·s, alternatively from 0.1 to 10,000 mPa.s.

The organopolysiloxane (B) is generally present in the curable silicone elastomer composition in an amount such that the ratio of the mole number of silicon-bonded hydrogen atoms of component (B) to the mole number of alkenyl groups of component (A) ranges from (0.7 : 1.0) to (5.0 : 1.0), preferably from (0.9 : 1.0) to (2.5 : 1.0), and most preferably from (0.9 : 1.0) to (2.0 : 1.0).

Typically dependent on the number of unsaturated groups in component (A) and the number of Si-H groups in component (B), component (B) will be present in an amount of from 0.1 to 40% by weight of the total composition, alternatively from 0.5 to 20%, by weight of the total composition alternatively 0.5 to 10% by weight of the total composition, further alternatively from 1% to 5% by weight of the total composition.

Component (C) is one or more addition reaction (hydrosilylation) catalysts selected from platinum group metal based catalysts such as platinum, ruthenium, rhodium, palladium, osmium and iridium; and compounds thereof. Platinum and or rhodium catalysts are particularly preferred. Component (C) catalyses the reaction between the alkenyl e.g. vinyl groups of component (A) and the Si-H groups of component (B) resulting in a cross-linked network when the composition is cured to an elastomer.

The catalyst used herein is preferably selected from the platinum based catalysts, such as chloroplatinic acid, chloroplatinic acid dissolved in an alcohol or a ketone chloroplatinic acid-olefin complexes, chloroplatinic acid-alkenylsiloxane complexes, chloroplatinic acid-diketone complexes, platinum black, platinum supported on a carrier, and mixtures thereof. Specific catalysts which may be utilised include Karstedt catalysts which are compounds of platinum (0) and divinyltetramethyldisiloxane such as Pt₂(1,1,3,3-tetramethyl-1,3-divinyldisiloxane)₃ or Pt(2,4,6,8-tetravinyl-2,4,6,8-tetramethylcyclotetrasiloxane)ₓ which may be provided in a solution of a low viscosity e.g. <5000, mPa.s at 25°C, alternatively <1000mPa.s at 25°C of polydimethylsiloxane typically vinyldimethyl terminated or trimethyl terminated or Pt-96 catalyst [PtCl2(cyclooctadiene)] available from Johnson Matthey.

The catalyst (C) is added in a quantity sufficient to cure the organopolysiloxane (A) and the organopolysiloxane (B) present in the composition. For example, it may be added in a quantity whereby the platinum atom is present in an amount of from 0.1 to 500 weight-ppm (parts per million), alternatively of from 1 to 200 weight-ppm, alternatively of from 1 to 100 weight-ppm, of platinum atom in the catalyst (C) based on the total weight of reactive organopolysiloxanes (A) and (B). Dependent on the ratios above typically there will be from 0.01% to 10% by weight of the total composition in the form of catalyst, alternatively 0.01% to 5% by weight of the total composition in the form of catalyst, further alternatively from 0.05% to 2% by weight of the total composition in the form of catalyst.

Component (D) is one or more finely divided, reinforcing fillers and/or non-reinforcing fillers. The reinforcing fillers may be high surface area fumed and precipitated silicas including rice hull ash and to a degree calcium carbonate. Non-reinforcing fillers may include such as crushed quartz, diatomaceous earths, barium sulphate, iron oxide, titanium dioxide and carbon black, talc, wollastonite. Other fillers which might be used alone or in addition to the above include aluminite, calcium sulphate (anhydrite), gypsum, calcium sulphate, magnesium carbonate, clays such as kaolin, aluminium trihydroxide, magnesium hydroxide (brucite), graphite, copper carbonate, e.g. malachite, nickel carbonate, e.g. zarachite, barium carbonate, e.g. witherite and/or strontium carbonate e.g. strontianite.

Other fillers may include, aluminium oxide, silicates from the group consisting of olivine group; garnet group; aluminosilicates; ring silicates; chain silicates; and sheet silicates. The olivine group comprises silicate minerals, such as but not limited to, forsterite and Mg₂SiO₄. The garnet group comprises ground silicate minerals, such as but not limited to, pyrope; Mg₃Al₂Si₃O₁₂; grossular; and Ca₂Al₂Si₃O₁₂. Aluninosilicates comprise ground silicate minerals, such as but not limited to, sillimanite; Al₂SiO₅; mullite; 3Al₂O₃.2SiO₂; kyanite; and Al₂SiO₅. Ring silicates may be utilised as non-reinforcing fillers, these include silicate minerals, such as but not limited to, cordierite and Al₃(Mg,Fe)₂[Si₄AlO₁₈]. The chain silicates group comprises ground silicate minerals, such as but not limited to, wollastonite and Ca[SiO₃]. Sheet silicates may alternatively or additionally be used as non-reinforcing fillers where appropriate group comprises silicate minerals, such as but not limited to, mica; K₂AI₁₄[Si₆Al₂O₂₀](OH)₄; pyrophyllite; Al₄[Si₈O₂₀](OH)₄; talc; Mg₆[Si₈O₂₀](OH)₄; serpentine for example, asbestos; Kaolinite; Al₄[Si₄O₁₀](OH)₈; and vermiculite. In one alternative the fillers will be selected from one or more of fumed silica, precipitated silica, calcium carbonate, talc, mica, quartz and, aluminium oxide.

The fillers as hereinbefore described may be subjected to a surface treatment for example with a fatty acid or a fatty acid ester such as a stearate, or with organosilanes, organosiloxanes, or organosilazanes hexaalkyl disilazane or short chain siloxane diols to render the filler(s) hydrophobic and therefore easier to handle and obtain a homogeneous mixture with the other sealant components The surface treatment of the fillers makes the ground silicate minerals easily wetted by the silicone polymer. These surface modified fillers do not clump, and can be homogeneously incorporated into the silicone polymer. This results in improved mechanical properties of the cured compositions. Furthermore, the surface treated fillers give a lower conductivity than untreated or raw material. Specific examples of surface treatment agents include fatty acids, fatty acid esters such as stearate short chain hydroxyldimethyl terminated polydimethyl siloxane, hydroxyldimethyl terminated Phenylmethyl Siloxane, hexamethyldisilazane, divinyltetramethyldisilazane, hexamethyldisiloxane, divinyltetramethyldisiloxane, hydroxyldimethyl terminated polydimethylmethylvinyl siloxane, octamethyl cyclotetrasiloxane, and silanes including but not limited to methyltrimethoxysilane, dimethyldimethoxysilane, vinyltrimethoxysilane, methyltriethoxysilane, vinyltriethoxysilane, chlrotrimethyl silane, dichlrodimethyl silane, trichloromethyl silane.

Typically the fillers used will be in the form of fine powders having a specific surface area measured by BET method of from about 50 m²/g up to 450 m²/g.

Component (D), the filler, is present in the composition in an amount of from 1 to 80% by weight, based on the total weight of the composition, alternatively from 1 to 50% by weight, based on the total weight of the composition, alternatively 5 to 50% by weight, based on the total weight of the composition, further alternatively from 8 to 30% by weight, based on the total weight of the composition.

Component (E) of the composition as described herein is one or more rubber modified epoxy resins, selected from the group of carboxyl-terminated butadiene acrylonitrile (CTBN) modified epoxy resin , hydroxyl-terminated butadiene acrylonitrile (HTBN) modified epoxy resin, amido-terminated butadiene acrylonitrile (ATBN) modified epoxy resin , epoxy-terminated butadiene acrylonitrile (ETBN) modified epoxy resin and vinyl-terminated butadiene acrylonitrile (VTBN) modified epoxy resin.

Rubber modified epoxy resins such as CTBN modified epoxy resins are commonly used as toughening agents for epoxy based materials. CTBN modified epoxy resins are made by reacting a diglycidyl ether of a bisphenol A 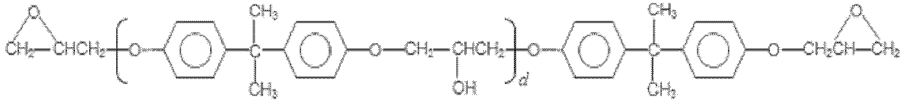 with a Carboxyl terminated butadiene-acrylonitrile

HOOC-[-(CH₂CH=CHCH₂)ₐ-(-CH₂CH(CN))_{b}-]_{c}-COOH

### Carboxyl terminated butadiene-acrylonitrile

With heat and in the presence of a Triphenylphosphane catalyst to gain the following:

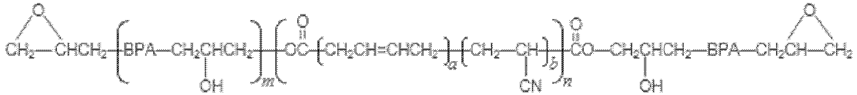

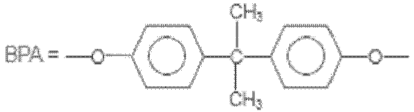

The diglycidyl ether of a bisphenol A and carboxyl terminated butadiene-acrylonitrile may be combined in any suitable ratio, e.g. for the sake of example from 10 : 1 to 1 : 5 alternatively from 10 : 1 to 1:2.

Component (E) of the composition is typically present in the composition in an amount of from 0.1 to 50% by weight, based on the total weight of the composition, alternatively from 0.1 to 35% by weight, based on the total weight of the composition, alternatively 0.1 to 15% by weight, based on the total weight of the composition.

Optional additives may be present in the composition depending on the intended use of the curable silicone elastomer composition. Examples include one or more cure inhibitors, mold releasing agents, adhesion catalysts, peroxides and/or pigments. Other additives might include electrical conductive fillers, thermally conductive fillers, pot life extenders, flame retardants, lubricants, adhesion promoters, mold release agents, diluents, solvents, UV light stabilizers, bactericides, wetting agents, heat stabilizers, compression set additives and plasticizers or the like.

Cure inhibitors are used, when required, to prevent or delay the addition-reaction curing process especially during storage. The optional Addition-reaction inhibitors of platinum based catalysts are well known in the art. Addition-reaction inhibitors include hydrazines, triazoles, phosphines, mercaptans, organic nitrogen compounds, acetylenic alcohols, silylated acetylenic alcohols, maleates, fumarates, ethylenically or aromatically unsaturated amides, ethylenically unsaturated isocyanates, olefinic siloxanes, unsaturated hydrocarbon monoesters and diesters, conjugated ene-ynes, hydroperoxides, nitriles, and diaziridines.

The inhibitors which may be utilised in the composition described above may be selected from the group consisting of acetylenic alcohols and their derivatives, containing at least one unsaturated bond. Examples of acetylenic alcohols and their derivatives include 1-ethynyl-1-cyclohexanol (ETCH), 2-methyl-3-butyn-2-ol, 3-butyn-1-ol, 3-butyn-2-ol, propargylalcohol, 2-phenyl-2-propyn-1-ol, 3,5-dimethyl-1-hexyn-3-ol, 1-ethynylcyclopentanol, 1-phenyl-2-propynol, 3-methyl-1-penten-4-yn-3-ol, and mixtures thereof.

The inhibitor may be added in the range of from 10 to 50,000 weight-ppm in the curable silicone elastomer composition.

When present the inhibitor is present in an amount providing a molar ratio of inhibitor to the platinum atom of from 10:1 to 900:1, alternatively of from 10:1 to 700:1, alternatively of from 20:1 to 500:1.

Examples of electrical conductive fillers include metal particles, metal oxide particles, metal-coated metallic particles (such as silver plated nickel), metal coated non-metallic core particles (such as silver coated talc, or mica or quartz) and a combination thereof. Metal particles may be in the form of powder, flakes or filaments, and mixtures or derivatives thereof.

Examples of thermally conductive fillers include boron nitride, alumina, metal oxides (such as zinc oxide, magnesium oxide, and aluminium oxide), graphite, diamond, and mixtures or derivatives thereof.

Examples of chain extender include straight chain organopolysiloxanes containing 2 silicon-bonded hydrogen groups on the terminal position. Such chain extender is different from organopolysiloxane (B).

Examples of flame retardants include aluminium trihydrate, chlorinated paraffins, hexabromocyclododecane, triphenyl phosphate, dimethyl methylphosphonate, tris(2,3-dibromopropyl) phosphate (brominated tris), and mixtures or derivatives thereof.

Examples of pigments include iron oxides, carbon black, and mixtures or derivatives thereof.

Examples of lubricants include tetrafluoroethylene, resin powder, graphite, fluorinated graphite, talc, boron nitride, fluorine oil, silicone oil, molybdenum disulfide, and mixtures or derivatives thereof.

Examples of adhesion promoters include silane coupling agents, such as methyltrimethoxysilane, vinyltrimethoxysilane, allyltrimethoxysilane, 1,6-bis(trimethylsilyl)hexane, 3-methacryloxypropyltrimethoxysilane and/or glycidoxypropyltrimethoxysilane.

Further additives include silicone fluids, such as trimethylsilyl or OH terminated siloxanes. Such trimethylsiloxy or OH terminated polydimethylsiloxanes typically have a viscosity < 150 mPa.s at 25°C. When present such silicone fluid may be present in the curable silicone elastomer composition in an amount ranging of from 0.1 to 5% weight, based on the total weight of the composition.

The curable silicone elastomer composition may comprise:
a self-adhesive curable silicone elastomer composition that can achieve significant adhesion on plastic/thermoplastic/resin material surfaces especially polycarbonate which includes:
(A) 5 to 95% based on the total weight of the composition, alternatively from 35 to 85 % by weight, based on the total weight of the composition, alternatively from 40 to 80% by weight based on the total weight of the composition and further alternatively from 50 to 80% by weight based on the total weight of the composition, of one or more organopolysiloxanes containing at least 2 alkenyl groups bonded to silicon atom per molecule;
(B) 0.1-40% weight of the total composition, alternatively from 0.5 to 20%, by weight of the total composition alternatively 0.5 to 10% by weight of the total composition, further alternatively from 1% to 5% by weight of the total composition, of one or more organopolysiloxane containing at least 2 silicon-bonded hydrogen atoms per molecule 1-5%;
(C) 0.01-10% by weight of the total composition, alternatively 0.01% to 5% by weight of the total composition, further alternatively from 0.05% to 2% by weight of the total composition of a platinum based catalyst,
(D) 1 to 80% by weight, based on the total weight of the composition, alternatively from 1 to 50% by weight, based on the total weight of the composition, alternatively 5 to 50% by weight, based on the total weight of the composition, further alternatively from 8 to 30% by weight, based on the total weight of the composition of one or more reinforcing and/or non-reinforcing fillers;
(E) 0.1 to 50% by weight, based on the total weight of the composition, alternatively from 0.1 to 35% by weight, based on the total weight of the composition, alternatively 0.1 to 15% by weight, based on the total weight of the composition alternatively 0.1-10%, of one or more rubber modified epoxy resins, selected from the group of carboxyl-terminated butadiene acrylonitrile (CTBN) modified epoxy resin , hydroxyl-terminated butadiene acrylonitrile (HTBN) modified epoxy resin, amido-terminated butadiene acrylonitrile (ATBN) modified epoxy resin , epoxy-terminated butadiene acrylonitrile (ETBN) modified epoxy resin and vinyl-terminated butadiene acrylonitrile (VTBN) modified epoxy resin; and optionally additives, in an amount of from 0.1 to 10 % by weight, based on the total weight of the composition

This disclosure is intended to include any of the above combinations providing the total % composition is 100% by weight.

The self - adhesive composition as hereinbefore described may be stored before use in two or more parts. In the case of a two part composition, i.e. having part I and part II: Part I may contain organopolysiloxane (A), (C) and filler (D), and Part II may include Components (B), and (E).

Part I may contain the catalyst (C) and any one of the organopolysiloxane (A) or the filler (D), or a combination of both.

Part II may contain the inhibitor (when present) and the organopolysiloxane (B), and any one of the organopolysiloxane (A) or the filler (D), or a combination of the latter two. Component (E) may be present in either or both part I or part II.

In some instances, the catalyst (C) is present in a separate part from the organopolysiloxane (B) and the inhibitor (when present).

The other optional additives may be in any of part I or II or in both parts. They may also be added after parts I and II have been combined.

The mixture may be prepared by providing for at least 3 separate parts, such as part I, part II and part III. Parts I and II may be provided as above. Part III may contain any of organopolysiloxane (A), organopolysiloxane (B), the catalyst (C), filler (D) rubber modified epoxy (E) or additives such as inhibitor and/or pigments, which may be present as required by the final use of the composition.

In one embodiment, there is provided a process for preparing an article or a composite part of an article comprising
a) forming a mixture of the self-adhesive curable silicone elastomer composition according to any preceding claim, and
b) applying the mixture onto a surface of a substrate;
c) curing the mixture at a temperature of from 80 to 250°C. Preferably the
substrate is a polycarbonate substrate.

In step a when the composition is stored in multiple parts before use, the different parts are combined together and homogeneously mixed, with the optional subsequent step of the addition of any additional additive as may be required by the final use of the composition.

The curable silicone elastomer composition may readily be prepared in any conventional mixing equipment suitable for mixing high viscosity polymers (i.e. > 1,000,000 mPa.s at 25°C), i.e. gums. The order of mixing is not critical if the composition is to be used immediately.

The homogeneous mixing of the components of the present composition may be undertaken by using a suitable mixing means such as a kneader mixer, a Z-blade mixer, a two roll mill (open mill), a three roll mill, a Haake^{®} Rheomix OS Lab mixer, a screw extruder or a twin-screw extruder or the like.

The composition may be processed (or cured) by injection moulding, press moulding, extrusion moulding, transfer moulding, press vulcanization, calendaring.

Curing can for example take place in a mold to form a moulded silicone article adhered to an e.g. polycarbonate substrate. The composition may for example be injection moulded to form an article adhered to the polycarbonate material, or the composition can be overmoulded by injection moulding around plastic/thermoplastic/resin especially a polycarbonate article or over a plastic/thermoplastic/resin especially a polycarbonate based substrate. When cured in presence of a heat sensitive substrate, the silicone elastomer composition of the present invention is cured under such conditions enabling development of mechanical adhesion with the heat sensitive substrate and the like, and more specifically, by using a temperature and curing time at which the heat sensitive substrate is not deformed, melted, or denatured.

The cured silicone elastomer obtained from the curable silicone elastomer composition typically has a hardness (durometer) < 75 Shore A.

The curable silicone elastomer composition may be cured into silicone elastomer articles which are adhered to polycarbonate materials or substrates, for example, tubes, strips, solid cord or custom profiles according to the size specifications of the manufacturer.

The curable silicone elastomer composition of this invention may be applied to the surface of the substrate by any suitable means such as rolling, spreading and the like, and cured as described above. After application of the composition onto the substrate, the curable silicone elastomer composition is cured at the cure temperature ranging between 80°C and 250°C. Such temperatures are generally determined by the materials involved.

Compositions as hereinbefore described may achieve good adhesion to plastic/thermoplastic/resin especially polycarbonate materials. They also have very good adhesion durability (thermal durability over 100°C, heat humidity durability over 85°C and 85% relative humidity (R.H.). It has been found that rubber modified epoxy resins function as adhesion additives in the composition without having a significant effect on the general physical properties (as shown in the examples below) and processability of silicone rubber.

In the compositions herein, rubber modified epoxy resin is shown to be functioning in the silicone rubber matrix as an additive to improve the adhesion to substrates, especially polycarbonate substrates. This was an unexpected effect given that such materials are used in epoxy resin compositions as toughening agents but not as adhesion promoters.

In one embodiment of there is provided an article consisting of a silicone elastomer cured from self-adhesive curable silicone elastomer composition as hereinbefore described or consisting of a silicone elastomer cured from self-adhesive curable silicone elastomer composition on a rigid or flexible substrate. Examples of substrates include plastic substrates, thermoplastic substrates, metal substrates, and textile substrates.

In another embodiment there is provided a composite part comprising a silicone elastomer cured from the curable silicone elastomer composition as described above on a rigid or flexible substrate. It is to be understood that such composite parts include those constructions where any of a substrate and a silicone elastomer are used as an integral component in an article. Examples of substrates include plastic substrates, thermoplastic substrates, metal substrates, and textile substrates.

Examples of plastic/thermoplastic/resin substrates (also organic resins) include acrylonitrile-butadiene-styrene, polyphenylene/styrene blends, polystyrenes, polycarbonate, polyurethane, styrene resin, polyethylene, polypropylene, acrylic, polyacrylamides, polyesters, polyethylene terephthalate, polybutylene terephthalate, polyphenylene oxide, polyphenylene sulfide, polysulfone, nylon, polyamide, polyimide, fluoropolymers, and liquid crystal resin, non-resin containing polyetherimides. In particular the substrate is a polycarbonate.

In one embodiment, there is provided an article or composite part comprising an elastomeric material generated from the self-adhesive curable silicone rubber composition above adhered to a plastic/thermoplastic/resin material, e.g. a polycarbonate substrate.

Examples of such articles or composite parts, in the case of all of the above can be found in various industries including, but not limited to, automotive applications, medical applications, consumer and industrial applications, electronic applications. In automotive applications, this may include housings with a silicone seal or gasket, plugs and connectors, components of various sensors, membranes, diaphragms, climate venting components, and the like. Electronic applications may include mobile phone cover seals, mobile phone accessories, precision electronic equipment, electrical switches and switch covers, watches and wristbands, wearable apparatus, e.g. facemasks, wearable electronic devices, and the like.

A composite part may also be selected from parts of mobile phones, mobile telecommunications equipment, gaming machines, clocks, image receivers, DVD equipment, MD equipment, CD equipment, and other precision electronic equipment, microwave ovens, refrigerators, electric rice cookers cathode ray TVs, thin displays of liquid crystal TVs and plasma TVs, various home appliance, copying machines, printers, facsimile machines, and other OA equipment, connector seals, spark plug caps, components of various sensors, and other automobile components.

### Examples

In the following examples the two part high viscosity rubber composition depicted in Table 1 was used as the basic composition.

**Table 1 - Standard 2 Part Composition**

| | A | B |
|---|---|---|
| dimethylvinylsiloxy-terminated polydimethyl siloxane gum (Williams Plasticity No range 140-165 mm/100) | 65.32 | 64.02 |
| dimethylvinylsiloxy-terminated dimethylmethylvinyl siloxane gum (Williams Plasticity No range 145-160mm/100) | 5.30 | 5.19 |
| 250g/m² (BET) Fumed Silica | 21.18 | 21.10 |
| dimethylhydroxyl terminated polydimethylsiloxane | 7.77 | 7.62 |
| dimethylhydroxyl terminated polydimethylmethylvinylsiloxane | 0.07 | 0.07 |
| 1,3-Diethenyl-1,1,3,3-Tetramethyldisiloxane Complexes (Platinum), 1.5% in dimethylvinylterminated, polydimethylsiloxane, having a viscosity of 500mPa.s at 25°C | 0.35 | |
| 1 -Ethynyl-1-cyclohexanol | | 0.05 |
| trimethyl terminated polydimethylmethylhydrogensiloxane having a viscosity of 5mPa.s at 25°C | | 1.95 |

The OH polymers are provided for in situ treatment of the filler to render it hydrophobic and easier to mix with the other ingredients.

Ingredients used in addition to the composition were as follows:
CV-ZC a 1:1 composition of Zirconium Tetrakisacetylacetonate and a dimethylvinylsiloxy-terminated Dimethyl Siloxane used as adhesion catalyst;
NPEL-127 a standard bisphenol A type epoxy resin having a viscosity of from 8,000-11,000cps, and an epoxide equivalent weight 176-184 g/eq.;
NPEL 128 a standard bisphenol A type epoxy resin having a viscosity of 12,000-15,000cps and an epoxide equivalent weight 184-190 g/eq.;
NPER 133L a polyurethane modified BPAtype epoxy resin with linear C4-C8 diol as solvent;
NPER 450 a carboxyl-terminated butadiene acrylonitrile (CTBN) modified BPAtype epoxy resin in accordance with component E of the composition herein.
All NPEL and NPER products listed above were obtained from Nan Ya Plastics Corporation.

The compositions were prepared by using the standard silicone rubber gum composition depicted in Table 1 with the sole difference that an amount, typically 2 parts by weight, of the indicated additive was introduced per 100 parts by weight of the Total composition i.e. Part A + Part B.

The process undertaken was that Part A, Part B and the additive were mixed together with Part A and Part B being added in a 1: 1 ratio. Compositions in the following Tables were prepared by mixing together using a Z-blade mixer or on two roll mill directly, without any additional treatment.

**Table 2a**

| | Comp. 1 | | Comp. 2 | | Comp. 3 | | Ex. 1 | | Ex. 2 | | Comp. 4 | |
|---|---|---|---|---|---|---|---|---|---|---|---|---|
| Raw Materials | A | B | A | B | A | B | A | B | A | B | A | B |
| Standard (Table 1) | 100 | 100 | 100 | 100 | 100 | 100 | 100 | 100 | 100 | 100 | 100 | 100 |
| CV-ZC M/B | | | | | | | | | | | 2.0 | |
| NPEL 127 | | 2.0 | | | | | | | | | | 2.0 |
| NPEL 128 | | | | 2.0 | | | | | | | | |
| NPER 133L | | | | | | 2.0 | | | | | | |
| NPER 450 | | | | | | | | 2.0 | 2.0 | | | |
| PC untreated | N | | N | | N | | G | | G | | N | |
| Mixing after 3 days | | | | | | | G | | G | | | |

In Table 2a, N indicates No adhesion and G indicates good adhesion. It was unexpectedly seen that only the rubber modified epoxy resin worked as an additive, in that only compositions containing NPER 450 gave good adhesion results when the prepared silicone rubber composition was applied onto an untreated polycarbonate substrate surface. Standard epoxy resins did not have a similar adhesive effect.

**Table 2b**

| | Comp. 5 | | Comp. 6 | | Ex. 3 | | Ex. 4 | | Ex. 5 | | Ex. 6 | |
|---|---|---|---|---|---|---|---|---|---|---|---|---|
| Raw Materials | A | B | A | B | A | B | A | B | A | B | A | B |
| Standard (Table 1) | 100 | 100 | 100 | 100 | 100 | 100 | 100 | 100 | 100 | 100 | 100 | 100 |
| CV-ZC M/B | 2.0 | | 2.0 | | 2.0 | | 2.0 | | | | | |
| NPEL 128 | | 2.0 | | | | | | | | | | |
| NPER 133L | | | | 2.0 | | | | | | | | |
| NPER 450 | | | | | | 2.0 | 2.0 | | 1.0 | | 3.0 | |
| PC untreated | N | | N | | G | | G | | G | | G | |
| Mixing after 3 days | | | | | P | | N | | | | | |
| HH aging 85°C /85%RH | | | | | | | | | P | | G | |

In Table 2b N indicates No adhesion, P indicates poor adhesion and G indicates good adhesion. It can be seen that the introduction of CV-ZC (a 1: 1 masterbatch of zirconium tetrakisacetylacetonate and dimethylvinylsiloxy-terminated Dimethyl Siloxane) which is used as an adhesion catalyst in some liquid silicone rubber compositions had no positive effect on adhesion and indeed may have given worse results when samples were aged for 3 days before mixing in Ex. 3. It was found that addition of 1 part by weight of NPER 450 gave good results at normal room temperature (Ex. 5) but adhesion was not as good after high heat aging at 85°C and 85% relative humidity (RH) for a period of 2 weeks.

**Table 2c**

| | Ex. 7 | | Comp. 7 | | Comp.8 | | Comp. 9 | | Comp. 10 | |
|---|---|---|---|---|---|---|---|---|---|---|
| Raw Materials | A | B | A | B | A | B | A | B | A | B |
| Standard (Table 1) | 100 | 100 | | | | | | | | |
| LSR 1 | | | 100 | 100 | | | | | | |
| LSR 2 | | | | | 100 | 100 | | | | |
| LSR 3 | | | | | | | 100 | 100 | 100 | 100 |
| NPER 450 | 5.0 | | 2.0 | | 2.0 | | 2.0 | | 2.0 | |
| PC untreated | G | | N | | N | | N | | N | |
| HH aging 85°C/85%RH | G | | | | | | | | | |

In Table 2c, N indicates No adhesion and G indicates good adhesion. It was unexpectedly seen that the rubber modified epoxy resin only worked as an adhesion additive with high viscosity silicone rubber (gum) materials, e.g. the standard formulation of Table 1. Examples using 3 alternative liquid silicone rubber compositions did not generate adhesion on the polycarbonate substrate surfaces to which they were applied.

In Table 3 the cure profile and physical properties are compared between the standard formulation indicated in Table 1 and the same composition with 2 parts by weight of NPER 450 added per 100 parts by weight of the total composition of the standard composition. For the avoidance of doubt tx% is the time to reach x% of maximum cure and such measurements were taken with a Moving Die Rheometer MDR 2000 from Monsanto Instruments Co., Akron, Ohio US and were based on ASTM D5289-92.

**Table 3**

| | Comp. 11 Standard formulation (Table 1) | Ex. 8 100 parts by weight of Standard Formulation + 2 parts by wt. of NPER 450 |
|---|---|---|
| Cure Conditions 120°C for 6 minutes | | |
| t02 (Seconds (s)) (ASTM D5289-92) | 14.4 | 18.6 |
| 110% (s) (ASTM D5289-92) | 18.6 | 23.4 |
| t20% (s) (ASTM D5289-92) | 20.4 | 25.8 |
| t50% (s) (ASTM D5289-92) | 24.0 | 30.6 |
| t90% (s) (ASTM D5289-92) | 30.0 | 47.4 |
| Press Cure 120°C for 10 minutes | | |
| Durometer, Shore A (ASTM D2240) | 39.1 | 36.7 |
| Tensile Strength (MPa) (ASTM D412- 16) | 9.1 | 9.8 |
| Elongation at Break (%) (ASTM D412- 16) | 1200 | 1302 |
| Modulus 100% (MPa) (ASTM D412- 16) | 0.92 | 0.80 |
| Modulus 200% (MPa) (ASTM D412- 16) | 1.46 | 1.27 |
| Modulus 300% (MPa) (ASTM D412- 16) | 1.79 | 1.59 |
| Tear Strength Die C kN/m (ASTM D624-00 (2012)) | 35.44 | 31.84 |

Whilst it was found that the presence of the NPER 450 seemed to result in a slower cure speed and lower hardness generally there was little change to the physical properties of the silicone rubber.

The results in Table 4 depict levels of adhesion after different press cure times using a cure temperature of 120°C. Heat and humidity (HH) aging and high temperature were undertaken in both instances for a period of two weeks. The composition was cured by compression molding to form samples of the size 100mm*25mm*2mm. These were adhered to polycarbonate plates obtained from Suzhou Aomei. Heat aging was undertaken on samples at 100°C for a period of four weeks. Heat & humidity aging was undertaken at 85°C and 85% relative humidity for a period of two weeks. The level of adhesion was tested immediately after the termination of the aging experiments using the 180 degree peel adhesion testing method described in method of ASTM C 794-10, Good results were obtained as indicated in Table 4 below (CF means cohesive failure, AF means adhesive failure, the number after that represents for the percentage of CF or AF).

**Table 4**

| | | | Ex. 9 | Ex. 10 | Ex. 11 |
|---|---|---|---|---|---|
| | Standard formulation (Table 1) | parts | 100 | 100 | 100 |
| Curing | NPER 450 | parts | 1 | 3 | 5 |
| 120°C /10min | Initial | Average Force (lbf/in) [N/m] | 49.72 [8706] | 58.46 [10236] | 65.14 [11406] |
| | | Failure Model | CF100 | CF100 | CF100 |
| | HH aging 85°C/85%RH, 2W | Average Force (lbf/in) [N/m] | 26.28 [4999] | 29.07 [5087] | 53.13 [9307] |
| | | Failure Model | CF20AF80 | CF100 | CF100 |
| | aging 100°C, 4W | Average Force (lbf/in) [N/m] | 59.65 [10444] | 56.43 [9880] | 69.03 [12087] |
| | | Failure Model | CF100 | CF100 | CF100 |
| 120°C/8min | Initial | Average Force (lbf/in) [N/m] | 43.18 [7560] | 62.33 [10913] | 58.26 [10201] |
| | | Failure Model | CF100 | CF100 | CF100 |
| | HH aging 85°C /85%RH, 2W | Average Force (lbf/in) [N/m] | 28.61 [5009] | 30.74 [5382] | 21.42 [3750] |
| | | Failure Model | AF 100 | CF80AF20 | CF100 |
| | aging 100°C, 4W | Average Force (lbf/in) [N/m] | 42.54 [7448] | 54.89 [9611] | 47.21 [8266] |
| | | Failure Model | CF100 | CF100 | CF100 |
| 120°C /6min | Initial | Average Force (lbf/in) [N/m] | 45.63 [7989] | 55.61 [9737] | 59.2 [10365] |
| | | Failure Model | CF100 | CF100 | CF100 |
| | HH aging 85°C /85%RH, 2W | Average Force (lbf/in) [N/m] | 15.3 [2679] | 34.54 [6047] | 22.52 [3943] |
| | | Failure Model | AF 100 | CF70AF30 | CF90AF10 |
| | aging 100°C, 4W | Average Force (lbf/in) [N/m] | 50.1 [8772] | 61.83 [10832] | 49.61 [8686] |
| | | Failure Model | CF100 | CF100 | CF100 |
| 120°C /4min | Initial | Average Force (lbf/in) [N/m] | 34.27 [6000] | 57.39 [10048] | 62.58 [10957] |
| | | Failure Model | CF50AF50 | CF100 | CF100 |
| | HH aging 85°C /85%RH, 2W | Average Force (lbf/in) [N/m] | 12.45 [2179] | 21.63 [3787] | 23.39 [4095] |
| | | Failure Model | AF 100 | CF50AF50 | CF90AF10 |
| | aging 100°C, 4W | Average Force (lbf/in) [N/m] | 55.2 [9665] | 57.12 [10001] | 63.98 [11202] |
| | | Failure Model | CF100 | CF100 | CF100 |
| 120°C/2min | Initial | Average Force (lbf/in) [N/m] | 21.03 [3682] | 48.99 [8578] | 60.32 [10562] |
| | | Failure Model | CF50AF50 | CF100 | CF100 |
| | HH aging 85°C /85%RH, 2W | Average Force (lbf/in) [N/m] | 0 | 21.3 [3729] | 34.45 [6032] |
| | | Failure Model | AF 100 | CF50AF50 | CF100 |
| | aging 100°C, 4W | Average Force (lbf/in) [N/m] | 50.2 [8790] | 53.08 [9294] | 62.26 [10901] |
| | | Failure Model | CF100 | CF100 | CF100 |

## Claims

1. A self-adhesive curable silicone elastomer composition that can achieve significant adhesion on plastic/thermoplastic/resin material substrates, especially polycarbonate material substrates comprising:
(A) 5-95% by weight of one or more organopolysiloxanes containing at least 2 alkenyl groups per molecule and having a viscosity of greater than 1,000,000mPa.s at 25°C, measured according to the method mentioned in the description,
(B) 0.1-40% by weight of an organopolysiloxane containing at least 2 silicon-bonded hydrogen atoms per molecule, SiH containing silicone polymers, preferred 1-5%;
(C) 0.01-10% by weight of a platinum group catalyst,
(D) 1-80% by weight of reinforcing and/or non-reinforcing fillers;
(E) 0.1-50% by weight of one or more rubber modified epoxy resins, selected from the group of carboxyl-terminated butadiene acrylonitrile (CTBN) modified epoxy resin , hydroxyl-terminated butadiene acrylonitrile (HTBN) modified epoxy resin, amido-terminated butadiene acrylonitrile (ATBN) modified epoxy resin , epoxy-terminated butadiene acrylonitrile (ETBN) modified epoxy resin and vinyl-terminated butadiene acrylonitrile (VTBN) modified epoxy resin; and optionally
additives such as one or more cure inhibitors, mold releasing agents, adhesion catalysts, silane crosslinkers and/or pigments;
wherein the total weight (wt.) % of the composition is 100%.

2. A self-adhesive curable silicone elastomer composition in accordance with claim 1 wherein the one or more rubber modified epoxy resins comprises or consists of carboxyl-terminated butadiene acrylonitrile (CTBN) modified epoxy resin.

3. A self-adhesive curable silicone elastomer composition in accordance with any preceding claim wherein component (A) is a silicone gum.

4. A self-adhesive curable silicone elastomer composition in accordance with any preceding claim wherein the composition comprises a cure inhibitor selected from the group consisting of acetylenic alcohols and their derivatives, containing at least one unsaturated bond.

5. A self-adhesive curable silicone elastomer composition in accordance with any preceding claim wherein the ratio of silicon-bonded hydrogen atom in organopolysiloxane (B) / alkenyl groups in organopolysiloxane (A) ranges from (0.7 : 1.0) to (5.0 : 1.0), preferably 1.1 to 3.5.

6. A self-adhesive curable silicone elastomer composition of any of the preceding claims stored before use in at least 2 separate parts.

7. A process for preparing an article or a composite part of an article comprising
a) forming a mixture of the self-adhesive curable silicone elastomer composition according to any preceding claim, and
b) applying the mixture onto a surface of a substrate;
c) curing the mixture at a temperature of from 80 to 250°C.

8. A process in accordance with claim 7 wherein the substrate is polycarbonate.

9. An article cured from self-adhesive curable silicone elastomer composition according to any of claims 1 to 6.

10. An article in accordance with claim 9 containing silicone elastomer cured from self-adhesive curable silicone elastomer composition in accordance with claims 1 to 6 adhered to a plastic substrate.

11. An article in accordance with claim 10 containing silicone elastomer cured from the self-adhesive curable silicone elastomer composition in accordance with claims 1 to 6 adhered on a plastic/thermoplastic/resin material substrate, especially polycarbonate substrate.

12. An article in accordance with any one of claims 9 to 11 selected from housings with a silicone seal or gasket, plugs and connectors, components of various sensors, membranes, diaphragms, climate venting components, personal electronic equipment such as mobile phone cover seals, mobile phone accessories, precision electronic equipment, electrical switches and switch covers, watches and wristbands or wearable electronic devices.

13. A composite part comprising a silicone elastomer cured from the curable silicone elastomer composition according to any of claims 1 to 6, on a plastic/thermoplastic/resin material substrate, especially polycarbonate material substrate.

14. A composite part in accordance with claim 13 selected from housings with a silicone seal or gasket, plugs and connectors, components of various sensors, membranes, diaphragms, climate venting components, personal electronic equipment such as mobile phone cover seals, mobile phone accessories, precision electronic equipment, electrical switches and switch covers, watches and wristbands, wearable apparatus and/or wearable electronic devices, parts of mobile phones, mobile telecommunications equipment, gaming machines, clocks, image receivers, DVD equipment, MD equipment, CD equipment, and other precision electronic equipment, microwave ovens, refrigerators, electric rice cookers cathode ray TVs, thin displays of liquid crystal TVs and plasma TVs, various home appliance, copying machines, printers, facsimile machines, and other OA equipment, connector seals, spark plug caps, components of various sensors, and other automobile components.

15. Use of a composition in accordance with claims 1 to 6 to make an article comprising a cured elastomeric material made from said composition adhered to a plastic/thermoplastic/resin material substrate, especially a polycarbonate material substrate.

16. Use of a composition in accordance with claims 1 to 6 to make a composite part comprising a cured elastomeric material made from said composition adhered to a plastic/thermoplastic/resin material substrate.

17. Use in accordance with claim 15 or 16 wherein the material substrate is polycarbonate.

## Patentansprüche

1. Eine selbsthaftende härtbare Silikonelastomerzusammensetzung, die auf Kunststoff-/Thermoplast-/Harzmaterialsubstraten, besonders Polycarbonatmaterialsubstraten, signifikante Haftung erzielen kann, die Folgendes beinhaltet:
(A) zu 5-95 Gew.-% ein oder mehrere Organopolysiloxane, die mindestens 2 Alkenylgruppen pro Molekül enthalten und eine Viskosität von mehr als 1 000 000 mPa s bei 25 °C, gemessen gemäß dem in der Beschreibung erwähnten Verfahren, aufweisen,
(B) zu 0,1-40 Gew.-% ein Organopolysiloxan, das mindestens zwei siliciumgebundene Wasserstoffatome pro Molekül, SiH enthaltende Silikonpolymere enthält, vorzugsweise 1-5 %;
(C) zu 0,01-10 Gew.-% einen Katalysator der Platingruppe,
(D) zu 1-80 Gew.-% verstärkende und/oder nicht verstärkende Füllstoffe;
(E) zu 0,1-50 Gew.-% ein oder mehrere kautschukmodifizierte Epoxidharze, die aus der Gruppe von mit carboxylterminiertem Butadienacrylnitril (CTBN) modifiziertem Epoxidharz, mit hydroxylterminiertem Butadienacrylnitril (HTBN) modifiziertem Epoxidharz, mit amidoterminiertem Butadienacrylnitril (ATBN) modifiziertem Epoxidharz, mit epoxidterminiertem Butadienacrylnitril (ETBN) modifiziertem Epoxidharz und mit vinylterminiertem Butadienacrylnitril (VTBN) modifiziertem Epoxidharz ausgewählt sind; und optional
Zusatzstoffe wie etwa ein oder mehrere Härtungshemmer, Formtrennmittel, Haftungskatalysatoren, Silanvernetzer und/oder Pigmente;
wobei das Gesamtgewicht (Gew.-%) der Zusammensetzung 100 % beträgt.

2. Selbsthaftende härtbare Silikonelastomerzusammensetzung gemäß Anspruch 1, wobei das eine oder die mehreren kautschukmodifizierten Epoxidharze mit carboxylterminiertem Butadienacrylnitril (CTBN) modifiziertes Epoxidharz beinhalten.

3. Selbsthaftende härtbare Silikonelastomerzusammensetzung gemäß einem der vorhergehenden Ansprüche, wobei Komponente (A) ein Silikongummi ist.

4. Selbsthaftende härtbare Silikonelastomerzusammensetzung gemäß einem der vorhergehenden Ansprüche, wobei die Zusammensetzung einen Härtungshemmer beinhaltet, der aus der Gruppe ausgewählt ist, die aus Acetylenalkoholen und ihren Derivaten besteht, enthaltend mindestens eine ungesättigte Bindung.

5. Selbsthaftende härtbare Silikonelastomerzusammensetzung gemäß einem der vorhergehenden Ansprüche, wobei das Verhältnis von siliciumgebundenen Wasserstoffatomen in Organopolysiloxan (B) zu Alkenylgruppen in Organopolysiloxan (A) von (0,7 : 1,0) bis (5,0 : 1,0), vorzugsweise von 1,1 bis 3,5 reicht.

6. Selbsthaftende härtbare Silikonelastomerzusammensetzung gemäß einem der vorhergehenden Ansprüche, die vor der Verwendung in mindestens 2 separaten Teile gelagert wird.

7. Ein Verfahren zum Herstellen eines Artikels oder eines Verbundteils eines Artikels, das Folgendes beinhaltet:
a) Bilden einer Mischung der selbsthaftenden härtbaren Silikonelastomerzusammensetzung gemäß einem der vorhergehenden Ansprüche, und
b) Auftragen der Mischung auf eine Oberfläche eines Substrats;
c) Härten der Mischung bei einer Temperatur von 80 bis 250 °C.

8. Verfahren gemäß Anspruch 7, wobei das Substrat Polycarbonat ist.

9. Ein aus der selbsthaftenden härtbaren Silikonelastomerzusammensetzung gehärteter Artikel gemäß einem der Ansprüche 1 bis 6.

10. Artikel gemäß Anspruch 9, der aus der selbsthaftenden härtbaren Silikonelastomerzusammensetzung gemäß Ansprüchen 1 bis 6 gehärtetes Silikonelastomer, das an einem Kunststoffsubstrat haftet, enthält.

11. Artikel gemäß Anspruch 10, der aus der selbsthaftenden härtbaren Silikonelastomerzusammensetzung gemäß Ansprüchen 1 bis 6 gehärtetes Silikonelastomer, das an einem Kunststoff-/Thermoplast-/Harzmaterialsubstrat, besonders Polycarbonatsubstrat, haftet, enthält.

12. Artikel gemäß einem der Ansprüche 9 bis 11, der aus Gehäusen mit einer Silikondichtung oder -dichtscheibe, Steckern und Verbindern, Komponenten von verschiedenen Sensoren, Membranen, Diaphragmen, Klimaentlüftungskomponenten, persönlicher elektronischer Ausrüstung, wie etwa Mobiltelefonabdeckungsdichtungen, Mobiltelefonzubehör, elektronischer Präzisionsausrüstung, elektrischen Schaltern und Schalterabdeckungen, Armbanduhren und Armbändern oder tragbaren elektronischen Vorrichtungen ausgewählt ist.

13. Ein Verbundteil, der ein aus der härtbaren Silikonelastomerzusammensetzung gemäß einem der Ansprüche 1 bis 6 gehärtetes Silikonelastomer auf Kunststoff-/Thermoplast-/Harzmaterialsubstrat, besonders Polycarbonatmaterialsubstrat, beinhaltet.

14. Verbundteil gemäß Anspruch 13, der aus Gehäusen mit einer Silikondichtung oder -dichtscheibe, Steckern und Verbindern, Komponenten von verschiedenen Sensoren, Membranen, Diaphragmen, Klimaentlüftungskomponenten, persönlicher elektronischer Ausrüstung, wie etwa Mobiltelefonabdeckungsdichtungen, Mobiltelefonzubehör, elektronischer Präzisionsausrüstung, elektrischen Schaltern und Schalterabdeckungen, Armbanduhren und Armbändern, tragbaren Geräten und/oder tragbaren elektronischen Vorrichtungen, Teilen von Mobiltelefonen, Mobiltelekommunikationsausrüstung, Spielautomaten, Uhren, Bildempfängern, DVD-Ausrüstung, MD-Ausrüstung, CD-Ausrüstung und anderer elektronischer Präzisionsausrüstung, Mikrowellenöfen, Kühlschränken, elektrischen Reiskochern, Kathodenstrahlfernsehern, dünnen Bildschirmen von Flüssigkristallfernsehern und Plasmafernsehern, verschiedenen Haushaltseinrichtungen, Kopierern, Druckern, Faxmaschinen und anderer Büroautomationsausrüstung, Verbinderdichtungen, Zündkerzenkappen, Komponenten von verschiedenen Sensoren und anderen Automobilkomponenten ausgewählt ist.

15. Verwendung einer Zusammensetzung gemäß Ansprüchen 1 bis 6, um einen Artikel herzustellen, der ein gehärtetes Elastomermaterial beinhaltet, das aus der Zusammensetzung hergestellt ist, die an einem Kunststoff-/Thermoplast-/Harzmaterialsubstrat, besonders einem Polycarbonatmaterialsubstrat, haftet.

16. Verwendung einer Zusammensetzung gemäß Ansprüchen 1 bis 6, um einen Verbundteil herzustellen, der ein gehärtetes Elastomermaterial beinhaltet, das aus der Zusammensetzung hergestellt ist, die an einem Kunststoff-/Thermoplast-/Harzmaterialsubstrat haftet.

17. Verwendung gemäß Anspruch 15 oder 16, wobei das Materialsubstrat Polycarbonat ist.

## Revendications

1. Une composition d'élastomère de silicone durcissable auto-adhésif qui peut parvenir à une adhérence d'envergure sur des substrats en plastique/thermoplastique/matériau à base de résine, surtout des substrats en matériau polycarbonate comprenant :
(A) de 5 à 95 % en poids d'un ou de plusieurs organopolysiloxanes contenant au moins 2 groupes alcényle par molécule et ayant une viscosité supérieure à 1 000 000 mPa.s à 25 °C, mesurée selon la méthode mentionnée dans la spécification,
(B) de 0,1 à 40 % en poids d'un organopolysiloxane contenant des polymères de silicone contenant au moins 2 atomes d'hydrogène liés au silicium par molécule, SiH, 1 à 5 % étant préféré ;
(C) de 0,01 à 10 % en poids d'un catalyseur du groupe du platine,
(D) de 1 à 80 % en poids de charges renforçantes et/ou non renforçantes ;
(E) de 0,1 à 50 % en poids d'une ou de plusieurs résines époxy modifiées au caoutchouc, sélectionnées dans le groupe constitué de résine époxy modifiée au butadiène acrylonitrile à terminaison carboxyle (CTBN), de résine époxy modifiée au butadiène acrylonitrile à terminaison hydroxyle (HTBN), de résine époxy modifiée au butadiène acrylonitrile à terminaison amido (ATBN), de résine époxy modifiée au butadiène acrylonitrile à terminaison époxy (ETBN) et de résine époxy modifiée au butadiène acrylonitrile à terminaison vinyle (VTBN) ; et facultativement
des adjuvants tels que un ou plusieurs inhibiteurs de durcissement, agents de démoulage, catalyseurs d'adhérence, agents de réticulation silane et/ou pigments ;
où le % en poids (wt %) total de la composition est 100 %.

2. Une composition d'élastomère de silicone durcissable auto-adhésif conformément à la revendication 1 où les une ou plusieurs résines époxy modifiées au caoutchouc comprennent ou sont constituées de résine époxy modifiée au butadiène acrylonitrile à terminaison carboxyle (CTBN).

3. Une composition d'élastomère de silicone durcissable auto-adhésif conformément à n'importe quelle revendication précédente où le composant (A) est une gomme de silicone.

4. Une composition d'élastomère de silicone durcissable auto-adhésif conformément à n'importe quelle revendication précédente où la composition comprend un inhibiteur de durcissement sélectionné dans le groupe constitué d'alcools acétyléniques et de leurs dérivés, contenant au moins une liaison insaturée.

5. Une composition d'élastomère de silicone durcissable auto-adhésif conformément à n'importe quelle revendication précédente où le rapport de l'atome d'hydrogène lié au silicium dans l'organopolysiloxane (B) aux groupes alcényle dans l'organopolysiloxane (A) est compris dans l'intervalle allant de (0,7/1,0) à (5,0/1,0), préférablement de 1,1 à 3,5.

6. Une composition d'élastomère de silicone durcissable auto-adhésif de n'importe lesquelles des revendications précédentes stockée avant utilisation en au moins 2 parties distinctes.

7. Un procédé pour la préparation d'un article ou d'une pièce composite d'un article comprenant
a) la formation d'un mélange de la composition d'élastomère de silicone durcissable auto-adhésif selon n'importe quelle revendication précédente, et
b) l'application du mélange sur une surface d'un substrat ;
c) le durcissement du mélange à une température allant de 80 à 250 °C.

8. Un procédé conformément à la revendication 7 où le substrat est du polycarbonate.

9. Un article durci à partir de la composition d'élastomère de silicone durcissable auto-adhésif selon n'importe lesquelles des revendications 1 à 6.

10. Un article conformément à la revendication 9 contenant un élastomère de silicone durci à partir de la composition d'élastomère de silicone durcissable auto-adhésif conformément aux revendications 1 à 6 qui est amené à adhérer à un substrat en plastique.

11. Un article conformément à la revendication 10 contenant un élastomère de silicone durci à partir de la composition d'élastomère de silicone durcissable auto-adhésif conformément aux revendications 1 à 6 qui est amené à adhérer sur un substrat en plastique/thermoplastique/matériau à base de résine, surtout un substrat en polycarbonate.

12. Un article conformément à n'importe laquelle des revendications 9 à 11 sélectionné parmi des boîtiers avec une garniture ou un joint étanche en silicone, des bouchons et connecteurs, des composants de divers capteurs, des membranes, des diaphragmes, des composants de ventilation climatique, de l'équipement électronique personnel tel que des coques étanches de téléphone mobile, des accessoires de téléphone mobile, de l'équipement électronique de précision, des interrupteurs électriques et couvre-interrupteurs, des montres et bracelets ou des dispositifs électroniques portables.

13. Une pièce composite comprenant un élastomère de silicone durci à partir de la composition d'élastomère de silicone durcissable selon n'importe lesquelles des revendications 1 à 6, sur un substrat en plastique/thermoplastique/matériau à base de résine, surtout un substrat en matériau polycarbonate.

14. Une pièce composite conformément à la revendication 13 sélectionnée parmi des boîtiers avec une garniture ou un joint étanche en silicone, des bouchons et connecteurs, des composants de divers capteurs, des membranes, des diaphragmes, des composants de ventilation climatique, de l'équipement électronique personnel tel que des coques étanches de téléphone mobile, des accessoires de téléphone mobile, de l'équipement électronique de précision, des interrupteurs électriques et couvre-interrupteurs, des montres et des bracelets, des appareils portables et/ou des dispositifs électroniques portables, des pièces de téléphone mobile, de l'équipement de télécommunications mobiles, des machines de jeu, des horloges, des récepteurs d'image, de l'équipement DVD, de l'équipement MD, de l'équipement CD, et autre équipement électronique de précision, des fours micro-ondes, des réfrigérateurs, des cuiseurs à riz électriques, des TV à tube cathodique, des écrans de faible épaisseur de TV à cristaux liquides et TV plasma, divers appareils domestiques, des photocopieurs, des imprimantes, des télécopieurs, et autre équipement de bureautique, des joints étanches de connecteur, des capuchons de bougie d'allumage, des composants de divers capteurs, et autres composants automobiles.

15. Utilisation d'une composition conformément aux revendications 1 à 6 pour réaliser un article comprenant un matériau élastomère durci réalisé à partir de ladite composition qui est amené à adhérer à un substrat en plastique/thermoplastique/matériau à base de résine, surtout un substrat en matériau polycarbonate.

16. Utilisation d'une composition conformément aux revendications 1 à 6 pour réaliser une pièce composite comprenant un matériau élastomère durci réalisé à partir de ladite composition qui est amené à adhérer à un substrat en plastique/thermoplastique/matériau à base de résine.

17. Utilisation conformément à la revendication 15 ou à la revendication 16 où le substrat de matériau est du polycarbonate.
